# EUROPÄISCHE PATENTSCHRIFT

(11) **EP 1 389 597 B1**
(45) Veröffentlichungstag und Bekanntmachung des Hinweises auf die Patenterteilung: **21.09.2005**
(21) Anmeldenummer: 03016754.8
(22) Anmeldetag: 23.07.2003
(51) Int. Cl.: B65G 59/08, B65G 65/23

(54) **Verfahren sowie Vorrichtung zum Entstapeln eines aus mehreren horizontal geschichteten Warenlagen bestehenden Warenstapels**
Method and apparatus for destacking a stack of articles arranged in a plurality of horizontal layers
Méthode et dispositif pour dépiler une pile d'articles disposés en plusieurs couches horizontales

(30) Priorität: 16.08.2002 DE 10237618
(43) Veröffentlichungstag der Anmeldung: 18.02.2004
(73) Patentinhaber: Dynamic Systems Engineering b.v., 7005 AG Doetinchem (NL)
(72) Erfinder: Hollander, Rudolf Richard, 7251 KC Vorden (NL)
(74) Vertreter: Christophersen & Partner

(56) Entgegenhaltungen:
- WO-A-96/05130
- US-A- 3 946 880
- US-A- 4 037 734
- US-A- 4 640 655

## Beschreibung

Die Erfindung betrifft ein Verfahren zum Entstapeln eines aus mehreren horizontal geschichteten Warenlagen bestehenden Warenstapels. Sie betrifft ferner eine Vorrichtung gemäß dem Oberbegriff des Anspruchs 7.

Eine Vorrichtung mit diesen Merkmalen ist bekannt. Es handelt sich hierbei um eine Art Entstapelhilfe, welche das Entnehmen der einzelnen Warenlagen von dem Warenstapel erleichtert und auf diese Weise die körperliche Beanspruchung der mit einer solchen Arbeit betrauten Personen verringert. Die Vorrichtung besteht aus einem Gestell, welches um eine horizontale Achse schwenkbar ist. Hauptbestandteile des Gestells sind ein Boden, auf dem der vorzugsweise auf einer standardisierten Transportpalette aufliegenden Warenstapel abgesetzt wird, sowie eine zu dem Boden rechtwinklige Seitenstütze. Die Seitenstütze erstreckt sich hierbei entlang einer der Seitenwände des Warenstapels, wobei sie mit ihrem oberen Ende mindestens bis zu der obersten Warenlage des Warenstapels reicht. Nachdem die beladene Palette auf dem Boden des Gestells abgesetzt wurde, wird das gesamte Gestell um die Schwenkachse über einen Winkel von ca. 80° verschwenkt. Am Ende des Schwenkprozesses nimmt die vorherige Seitenstütze eine in etwa horizontale Lage ein, wohingegen der Boden sich nunmehr im wesentlichen senkrecht erstreckt. Der Warenstapel liegt mit seiner einen Seitenwand auf der Seitenstütze auf, die auf diese Weise als neue eigentliche Unterlage dient. Mit anderen Worten: Der Warenstapel wird unter Verwendung des drehbaren Gestells auf seine Seite gelegt. Aufgrund dieser Seitenlage lassen sich nunmehr vom Ende der Seitenstütze her die dort angeordneten, die oberste Warenlage bildenden Warengebinde einfach und kräfteschonend entnehmen. Sind auf dieser Weise die Warengebinde der obersten Warenlage entnommen, wird sodann ein Mechanismus betätigt, welcher den gesamten Warenstapel parallel zu der Seitenstütze nachschiebt, um es so dem Benutzer zu ermöglichen, weitere Warengebinde entlang des äußeren Randes der Seitenstütze zu ergreifen und zu entnehmen. Mit dem Entfernen jeder weiteren Warenlage wird der Warenstapel sukzessive weiter vorgeschoben. Dieses im wesentlichen horizontale Vorschieben des Warenstapels erfolgt, indem der Boden des Gestells nicht starr mit der Seitenstütze verbunden ist, vielmehr der Boden entlang der Seitenstütze verschiebbar ist, vorzugsweise mittels eines entsprechenden motorischen Antriebs. Erst wenn auch die letzte Warenlage entleert wurde, wird der Boden, welcher inzwischen nahezu das Ende der Seitenstütze erreicht hat, wieder in seine ursprüngliche Position am anderen Ende der Seitenstütze zurückgefahren. Gleichzeitig wird das Gestell zurückverschwenkt, so daß dieses sodann zur Aufnahme der nächsten beladenen Palette zur Verfügung steht.

Die voranstehend beschriebene Vorrichtung ermöglicht kein automatisches Entstapeln mehrlagiger Warenstapel. Vielmehr ist sie mehr im Sinne einer Entstapelhilfe zu verstehen, die das Entleeren der Palette mit vermindertem körperlichen Einsatz ermöglicht. Zu diesem Zweck erfolgt das Kippen der Palette auch bis in eine solche Höhe, in der die auf der Seitenstütze des Gestells seitlich aufliegenden Warengebinde in üblicher Arbeitshöhe ergriffen werden können.

Bekannt sind auch schon vollautomatisch arbeitende Entstapelungsvorrichtungen. Diese verwenden häufig Greifvorrichtungen mit Unterdruck-Greifern. Die Greifer senken sich von oben her auf die oberste Warenlage des Warenstapels ab, daraufhin wird in den Saugnäpfen der Greifer ein starker Unterdruck erzeugt. Beim anschließenden Anheben der Greifer nehmen diese die Waren mit, so daß sodann ein Ablegen, z.B. auf einem benachbart angeordneten Förderband, erfolgen kann. Nicht bei allen Arten von Warengebinden arbeiten derartige unterdruckbetätigte Greifsysteme ausreichend sicher. In der Regel verlangen die verwendeten Unterdruck-Greifer eine relativ glatte, luftundurchlässige Oberfläche, um den für ein sicheres Ergreifen erforderlichen Unterdruck aufbauen zu können. Bei Verpackungen mit ebenen, glattflächigen Oberseiten arbeiten diese Systeme gut, hingegen versagen sie z.B. bei Verpackungsgebinden mit unebener, ungleichmäßiger Oberseite, wie sie gerade bei Getränkeverpackungen sowie anderen Verpackungen des Lebensmittelsektors häufig anzutreffen ist.

Bekannt ist aus der PCT WO 00/64790 eine ebenso mit Unterdruckwirkung arbeitende Entstapelungsvorrichtung, mit der sich gleichzeitig eine ganze Warenlage von einem horizontal abgestellten Warenstapel entnehmen läßt. Diese Vorrichtung verwendet eine Haube, die von oben her soweit auf den quaderförmigen Warenstapel abgesenkt wird, daß sich zumindest die oberste Warenlage innerhalb dieser Haube befindet. An den Innenseiten ist die Haube über ihren gesamten Umfang mit aufblasbaren Luftkammem versehen. Nachdem die Haube ihre abgesenkte Stellung eingenommen hat, werden diese Luftkammem mit Druckluft gefüllt, wodurch sich die flexiblen Wandungen der Luftkammer von außen nahezu spaltfrei um die Warenlage legen. Zusätzlich wird in dem Haubenraum oberhalb des Warenstapels ein deutlicher Unterdruck erzeugt. Aus der Kombination der von außen durch die aufgeblasenen Luftkammern erzeugten Preßkraft mit der Saugwirkung des Unterdrucks in der Haubenkammer entsteht eine hinreichende Haltekraft, um sodann durch Anheben der Haube die gesamte oberste Warenlage anzuheben und durch eine anschließende Seitwärtsbewegung der Haube auf einem Förderband abzusetzen. Auf dem Förderband erfolgt dann die weitere Aufteilung der bis dahin noch geschlossenen Warenlage in die einzelnen Warengebinde. Die beschriebene Vorrichtung arbeitet mit relativ großem Durchsatz, sie ist jedoch durch die eingebauten Mittel sowohl zur Erzeugung eines Überdrucks wie auch zur Erzeugung eines Unterdrucks in apparativ-konstruktiver Hinsicht sehr aufwendig, weshalb die Investitionskosten für die Vorrichtung enorm sind. Nachteilig ist ferner, daß wegen der begrenzten Ausdehnungsfähigkeit der aufblasbaren Luftkammern die Haube individuell auf den Grundriß des jeweils zu entleerenden Warenstapels zugeschnitten ist. Falls sich der Grundriß des Warenstapels zu stark ändert, muß die gesamte Geometrie der Haube sowie der aufblasbaren Luftkammem angepaßt werden, was in der Regel nur durch den kompletten Austausch der Haube möglich ist.

Ein weiteres Verfahren zum maschinellen Entstapeln von horizontal auf einer Palette geschichteten Waren ist aus der US 4,037,734 bekannt. Die beladene Palette wird in einem Gestell angeordnet, welches sich um 90° bis in eine Stellung verschwenken läßt, in welcher die Palette einschließlich der gestapelten Waren auf einer vor dem Verschwenken vertikalen und nach dem Verschwenken horizontalen Seitenstütze aufliegen. An dem Ende der Seitenstütze ist an einem Gelenk ein verschwenkbarer Winkel gelagert. Durch Verschieben des Warenstapels entlang der Seitenstütze mittels eines entsprechenden Antriebes gelangt die oberste Warenlage auf den einen, zu diesem Zeitpunkt horizontalen Schenkel des Winkels. Durch anschließendes Verschwenken des Winkels gleichsinnig zu dem vorangegangenen Verschwenken nur des Gestells wird die oberste Warenlage von den übrigen Warenlagen separiert und gleichzeitig abgesenkt. Weitere Greif- bzw. Transporteinrichtungen übernehmen sodann die auf solche Weise separierte Warenlage. Das Verfahren bzw. die Entstapelvorrichtung nach der US 4,037,734 erfordern einen relativ großen Platzbedarf.

Auch aus der US 3,946,880 ist ein Verfahren zum maschinellen Entstapeln eines aus mehreren horizontal geschichteten Warenlagen bestehenden Warenstapels bekannt. Die den Warenstapel tragende Palette wird auf dem Boden eines Gestells, welches eine zu dem Boden rechtwinklig verlaufende Seitenstütze aufweist, abgesetzt. Durch Verschwenken des gesamten Gestells um eine horizontale Schwenkachse gelangt der gesamte Warenstapel in eine um 90° geneigte Position, in welcher der Warenstapel dann auf der Seitenwand des Gestells aufliegt. Durch Rückschwenken des separat schwenkbaren Bodens wird zunächst die Palette des Warenstapels In ihre ursprüngliche Position zurückverschwenkt und einer Sammelstelle zugeführt. Anschließend schwenkt der Boden wieder nach oben, und der auf der Seitenwand aufliegende Warenstapel wird entlang der Seitenwand verschoben, bis dessen unterste Lage an dem Boden des Gestells anliegt. Durch wiederholtes Rückschwenken und anschließendes wieder Hochschwenken des Bodens wird sodann jeweils die unterste Schicht des Warenstapels von dem übrigen Warenstapel getrennt. Bei dieser Vorrichtung ist der apparativ-konstruktive Aufwand groß. Zudem ist nur die Trennung der jeweils unten liegenden Schicht des Warenstapels, nicht aber die Trennung der oberen Schicht möglich.

Der Erfindung liegt die **Aufgabe** zugrunde, ein für ein vollautomatisches Entstapeln von aus mehreren Warenlagen bestehenden Warenstapeln geeignetes Verfahren zu schaffen, das sich mit geringem apparativ-konstruktiven Aufwand platzsparend durchführen läßt.

Zur **Lösung** dieser Aufgabe wird ein Verfahren zum Entstapeln eines aus mehreren horizontal geschichteten Warenlagen bestehenden Warenstapels vorgeschlagen, welches gekennzeichnet ist durch die Schritte:
a) Absetzen des Warenstapels auf einem einen Boden und eine hierzu rechtwinklige Seitenstütze aufweisenden Gestell, wobei der Warenstapel auf dem Boden aufliegt, während sich die Seitenstütze mit geringem oder keinem Abstand parallel zu einer der Seitenwände des Warenstapels erstreckt;
b) Schwenken des Gestells um eine horizontale Schwenkachse bis in eine Lage, in welcher der Warenstapel auf der Seitenstütze aufliegt;
c) Verschieben des Warenstapels entlang der Seitenstütze, wobei die oberste Warenlage die Seitenstütze verläßt und auf einen zu diesem Zeitpunkt in Verlängerung zu der Seitenstütze angeordneten Übernahmetisch gelangt;
d) durch Verlagerung des Übernahmetisches Trennung der obersten Warenlage von den übrigen Warenlagen des Warenstapels;
e) Weitergabe des Warenstapels durch ein Verschwenken des Übernahmetisches gegensinnig zu dem vorangegangenen Verschwenken des Gestells bei gleichzeitiger Abstützung der Warenlage.

Ebenfalls zur **Lösung** der voranstehend genannten Aufgabe ist eine Vorrichtung mit den eingangs genannten Merkmalen gekennzeichnet durch einen bei vollständig verschwenktem Gestell in Verlängerung zu dessen Seitenstütze angeordneten und gegensinnig zu dem Gestell verschwenkbaren, die Warenlage abstützenden Übernahmetisch sowie Antriebsmittel für den Übernahmetisch, um diesen aus seiner Übernahmeposition in Verlängerung zu der Seitenstütze in eine dem gegenüber verlagerte Position zu verlagern.

Ein solches Verfahren bzw. eine solche Vorrichtung ermöglicht auf geringer Grundfläche ein vollautomatisches Entstapeln von aus mehreren Warenlagen bestehenden Warenstapeln, wobei der apparativ-konstruktive Aufwand für die Realisierung der Vorrichtung vergleichsweise gering ist.

Die Erfindung geht aus von dem an sich aus dem Stand der Technik bekannten Grundgedanken, den Warenstapel in einem Gestell anzuordnen und dieses Gestell um einen Winkel von nicht mehr als 90° zu verschwenken, um so den Warenstapel auf eine seiner Seiten zu kippen. Als weiteres konstruktives Element kommt bei der Erfindung ein Übernahmetisch hinzu, der bei vollständig verschwenktem Gestell in Fluchtung zu dessen Seitenstütze angeordnet ist. Der Übernahmetisch ist gegensinnig zu dem Gestell verschwenkbar und ist ferner mit Antriebsmitteln versehen, um den Übernahmetisch von seiner Übernahmeposition in eine dem gegenüber abgesenkte oder anderweitig veränderte Position zu verlagern, und auf diese Weise die vollständige Trennung der obersten Warenlage von den übrigen Warenlagen des Warenstapels zu bewirken. Insbesondere wird vorgeschlagen, daß der Übernahmetisch um eine horizontale Schwenkachse verschwenkbar ist, die sich parallel zu der horizontalen Schwenkachse des Gestells erstreckt. Der Übernahmetisch mit der darauf aufliegenden Warenlage verschwenkt vorzugsweise soweit, bis der Übernahmetisch eine im wesentlichen vertikale Lage eingenommen hat. Sodann läßt sich die auf diese Weise isolierte Warenlage auf eine nachgeordnete Fördereinrichtung überführen, z.B. ein horizontales Förderband, auf welchem dann die weitere Aufteilung in einzelne Warengebinde erfolgt. Eine besonders platzsparende, mit geringer Grundfläche auskommende Anordnung einerseits des verschwenkbaren Gestells und andererseits des ebenfalls verschwenkbaren Übernahmetisches wird dadurch erzielt, daß der Übernahmetisch gegensinnig zu dem Gestell verschwenkbar ist.

Vor der Verlagerung des Übernahmetisches wird vorzugsweise der auf der Seitenstütze aufliegende Warenstapel soweit in Richtung auf seine Ausgangsposition zurückgezogen, daß sich zwischen der auf dem Übernahmetisch aufliegenden Warenlage und den übrigen Warenlagen des Warenstapels ein Spalt von vorzugsweise 2-10 cm Breite einstellt. Ein solcher Spalt verhindert, daß bei der Verlagerung der abzutrennenden obersten Warenlage von den übrigen Warenlagen ein Verhaken oder Verkanten einzelner Waren oder Warengebinde stattfindet.

Von besonderem Vorteil ist eine Ausgestaltung unter Verwendung einer gemeinsam mit dem Übernahmetisch verschwenkbaren, rechtwinklig zu diesem angeordneten Stützplatte. Auf dieser Stützplatte liegt die abgetrennte Warenlage nach Abschluß des Verschwenkens des Übernahmetisches auf. Auf der Stützplatte aufliegend läßt sich die so isolierte Warenlage dann mit einfachen Mitteln, z.B. einem horizontal arbeitenden Schieber, auf eine nachfolgende Fördereinrichtung überführen, z.B. ein Förderband.

Mit einer weiteren Ausgestaltung der Vorrichtung wird vorgeschlagen, daß der Übernahmetisch als Hubtisch ausgebildet ist, und daß die Antriebsmittel den Hubtisch im wesentlichen vertikal absenken. Bei dieser Ausgestaltung gelangt die isolierte oberste Warenlage auf einen Hubtisch, welcher in einem anschließenden Verfahrensschritt im wesentlichen vertikal abgesenkt wird, wodurch die vollständige Trennung der isolierten Warenlage vollendet ist und sodann die Warenlage auf nachgeordnete Fördereinrichtungen weitergegeben werden kann.

Für die weitere Aufteilung der Warenlage in die Einzelwaren oder einzelnen Warengebinde, ist es von Vorteil, wenn die bereits abgetrennte Warenlage zunächst wieder in ihre ursprüngliche horizontale Lage überführt wird. Hierzu ist eine Ausgestaltung der erfindungsgemäßen Vorrichtung gekennzeichnet durch eine rechtwinklig zu dem Übernahmetisch angeordnete Stützplatte, die gemeinsam mit dem Übernahmetisch verschwenkbar ist. Während zum Zeitpunkt der Übernahme die zu isolierende Warenlage auf dem Übernahmetisch aufliegt, gelangt während des anschließenden Verschwenkprozesses das Hauptgewicht der Warenlage auf die Stützplatte, welche sich zum Abschluß des Schwenkprozesses horizontal erstreckt. Die Stützplatte bildet dann eine reguläre Unterlage, auf der aufliegend die Warenlage sodann auf eine nachfolgende Fördereinrichtung geschoben werden kann.

Zur Erzielung einer apparativ-konstruktiv einfachen Lösung, die sich zudem platzsparend mit geringer Grundfläche realisieren läßt, erfolgt die Lagerung der Stützplatte auf der horizontalen Achse, wohingegen der Übernahmetisch durch die Antriebsmittel entlang der Stützplatte verfahrbar ist. Dies ermöglicht eine kombinierte Bewegung des Übernahmetisches, wobei dieser sich in einem ersten Bewegungsabschnitt absenkt, wohingegen in einem zweiten Bewegungsabschnitt das Verschwenken des Übernahmetisches erfolgt. Beide Bewegungen lassen sich auf kleinstem Raum unterhalb des Gestells durchführen, weshalb eine besonders platzsparende Bauweise der Vorrichtung erreichbar ist.

Um die bereits isolierte Warenlage auf eine nachgeordnete Fördereinrichtung zu überführen, wird mit einer weiteren Ausgestaltung der Vorrichtung vorgeschlagen, daß die Stützplatte in ihrer abgesenkten Stellung zu einer Förderbahn fluchtet, daß ein Schieber vorgesehen ist, um eine auf der Stützplatte aufliegende Warenlage bis auf die Förderbahn zu schieben und daß die Bewegungsrichtung des Schiebers parallel zu der Achse verläuft, um die der Übernahmetisch verschwenkbar ist. Um bei der Horizontalbewegung des auf dem Gestell aufliegenden Warenstapels ein Umkippen der äußersten Warenlage infolge von durch die Querbewegung ausgelösten Trägheitskräften zu vermeiden, wird mit einer weiteren Ausgestaltung vorgeschlagen, daß an einem freien Ende des Übernahmetisches eine Platte verstellbar angeordnet ist, die sich parallel zu der Stützplatte erstreckt.

Weitere Vorteile und Einzelheiten werden nachfolgend anhand eines Ausführungsbeispieles und unter Bezugnahme auf die anliegenden Zeichnungen erläutert. Darin zeigen:
- Fig. 1: Eine erfindungsgemäße Vorrichtung in einer Ansichtdarstellung, wobei ein verschwenkbares Gestell der Vorrichtung mit einer gerade zugeführten Palette mit darauf aufliegendem Warenstapel beladen worden ist;
- Fig. 2: Die Gegenstände nach Fig. 1 in einem nachfolgenden Verfahrensschritt, in dem die Palette auf dem Gestell verschwenkt wird;
- Fig. 3: Die Gegenstände nach Fig. 2 in einem nachfolgenden Verfahrensschritt, in dem ein Übernahmetisch in Höhe des auf seiner Seite aufliegenden Warenstapels gebracht wird;
- Fig. 4: Die Gegenstände nach Fig. 3 in einem nachfolgenden Verfahrensschritt, in dem die oberste Warenlage des Warenstapels durch Verschieben auf den Übernahmetisch gelangt;
- Fig. 5: Die Gegenstände nach Fig. 4 in einem nachfolgenden Verfahrenschritt, in dem die oberste, auf dem Übernahmetisch aufliegende Warenlage abgesenkt wird;
- Fig. 6: Die Gegenstände nach Fig. 5 in einem nachfolgenden Verfahrensschritt, in dem die isolierte Warenlage verschwenkt wird, um diese in Ausrichtung zu einer nachfolgenden Fördereinrichtung zu bringen;
- Fig. 7 a: Eine weitere Detaildarstellung der Vorrichtung, wobei zusätzlich ein Schieber dargestellt ist, mit dem sich die bereits isolierte Warenlage auf eine nachfolgende Fördereinrichtung schieben läßt und

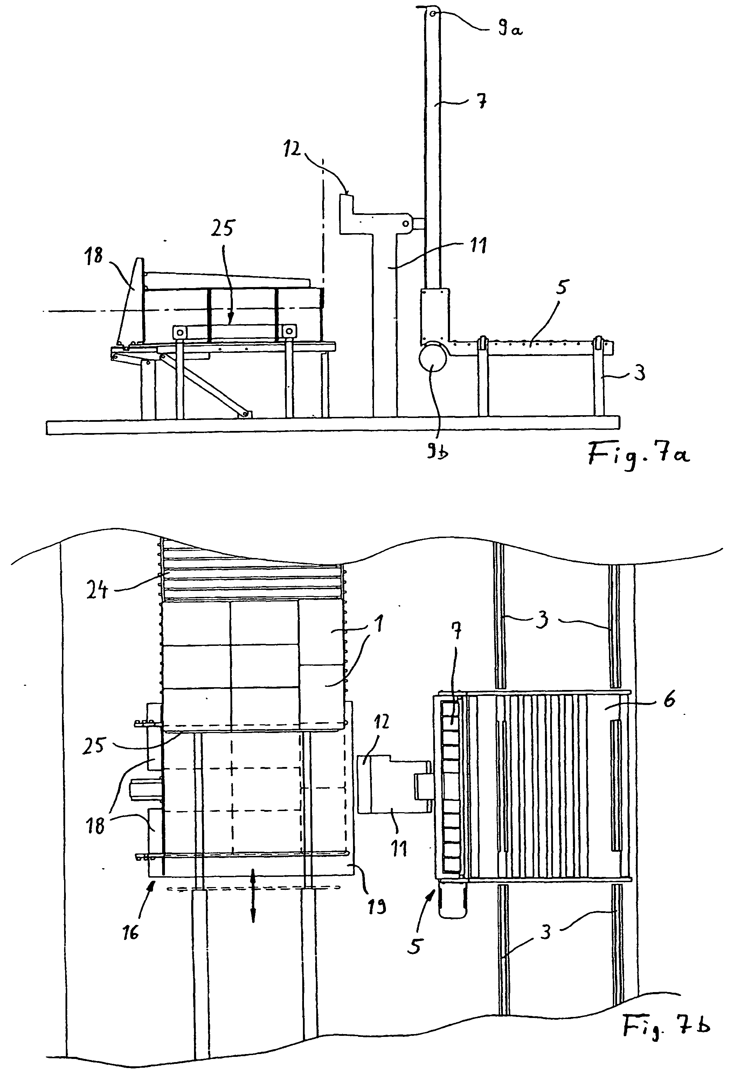

- Fig. 7 b: die Gegenstände der Fig. 7 a in einer Draufsicht.

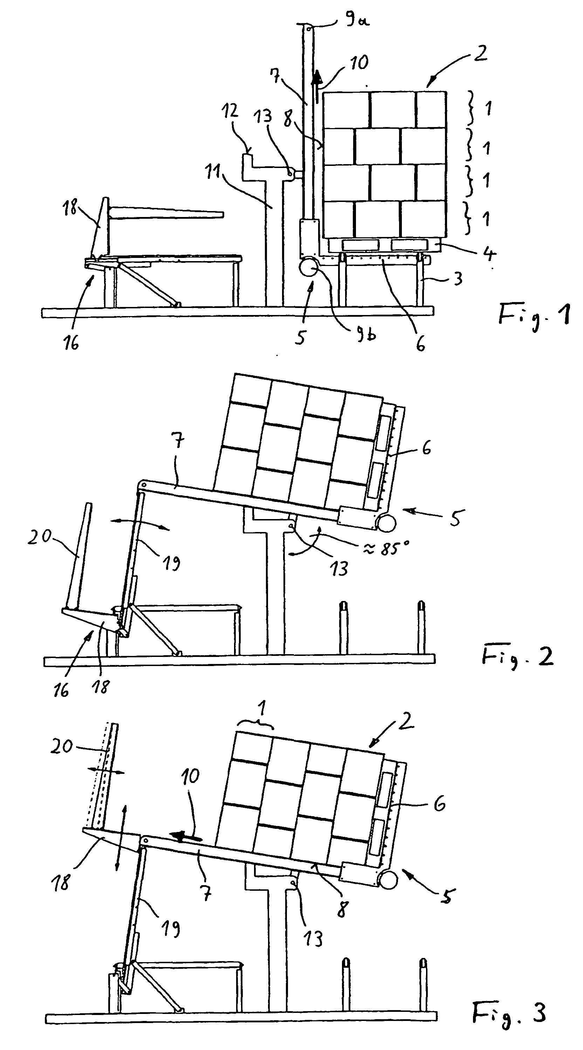

Die Fig. 1 zeigt ebenso wie Fig. 7 a die nachfolgend beschriebene Vorrichtung zum Entstapeln eines aus mehreren horizontal geschichteten Warenlagen 1 bestehenden Warenstapels 2 in einer Ruhestellung, die zugleich die Ausgangsstellung des Verfahrens ist. Über eine Förderbahn 3 gelangt eine mit dem Warenstapel 2 beladene Palette 4 in ein Gestell 5, welches sich in erster Linie aus einem Boden 6 sowie einer Seitenstütze 7 zusammensetzt. In der Ausgangsstellung fluchtet die Auflagefläche des Bodens 6 mit den entsprechenden Auflageflächen der z.B. als Rollenbahn ausgebildeten Förderbahn 3, so daß die Palette 4 mit dem darauf lagernden Warenstapel 2 horizontal in das Gestell 5 einfahren kann. Hierbei liegt die Palette mit dem Warenstapel auf dem Boden 6 des Gestells auf, dieser übernimmt also die gesamte Gewichtslast des Warenstapels.

Die Seitenstütze 7 des Gestells 5 erstreckt sich rechtwinklig zu dessen Boden 6, und damit parallel zu der Seitenwand 8 des Warenstapels 2. Der Warenstapel 2 kann mit seiner Seitenwand 8 auch unmittelbar an der Seitenstütze 7 anliegen. Die Seitenstütze 7 ist mit einer Fördereinrichtung versehen, vorzugsweise einem Transportband, welches zum einen bei 9 a, und zum anderen bei 9 b über Umlenkrollen geführt ist. Das Transportband erzeugt an der Innenseite der Seitenstütze 7 eine in Fig. 1 mit dem Bezugszeichen 10 veranschaulichte Förderkraft, auf deren Wirkung später noch eingegangen werden wird. Die Seitenstütze 7 ist ferner mit einer Längsführung für den Boden 6 versehen. Auf diese Weise läßt sich der Boden 6 unter Beibehaltung seiner rechtwinkligen Ausrichtung an der Seitenstütze 7 entlang bewegen. Auch darauf wird später noch näher eingegangen werden. Schließlich ist das aus Boden und Seitenwand bestehende Gestell 5 um die Schwenkachse 13 verschwenkbar, und zwar um einen Winkel, der zwischen 80° und 87,5° beträgt. Fig. 1 zeigt das Gestell mit der Platte in der Ausgangslage, Fig. 2 dieselben Teil in vollständig verschwenktem Zustand, in dem sich der Warenstapel 2 mit wesentlichen Teilen seines Gewichts auf der Seitenstütze 7 abstützt. Die ortsfeste Stütze 11 des Gestells 5 ist zu diesem Zweck mit einem Anschlag 12 versehen.

Zu der Vorrichtung gehört ferner ein auf einer Achse schwenkbar gelagertes Übergabegestell 16. Dieses setzt sich zusammen aus einem Übernahmetisch 18, einer zu dem Übernahmetisch 18 rechtwinklig angeordneten Stützplatte 19 sowie einer weiteren Platte 20, deren Innenseite sich parallel zu der Innenseite der Stützplatte 19 erstreckt.

Fig. 2 zeigt das von dem Gestell 5 konstruktiv getrennte Übergabegestell 16 noch vor der Übernahme der Waren. Die Stützplatte 19 befindet sich hierbei mit ihrem freien Ende in einer Stellung knapp unterhalb des freien Endes der Seitenstütze 7 des Gestells 5. Die Enden von Seitenstütze 7 und Stützplatte 19 stehen daher im Winkel aufeinander. Da der Winkel, unter welchem der Warenstapel 2 verschwenkt wurde, ca. 85° beträgt, weist auch die Stützplatte 19 zur Horizontalen eine Neigung von ca. 85° auf.

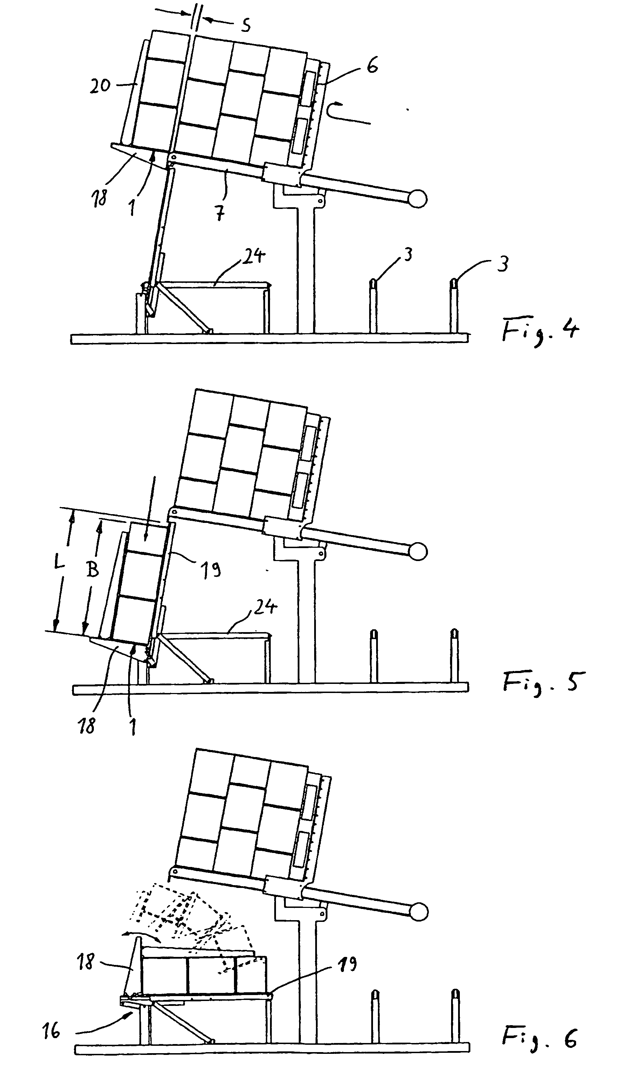

Der Übernahmetisch 18 ist als Hubtisch ausgebildet und befindet sich gem. Fig. 2 in seiner untersten Position, gem. Fig. 3 in seiner obersten Position. Der Vergleich dieser Figuren läßt erkennen, daß die Stützplatte 19 mit Längsführungen versehen ist, an denen entlang der Übernahmetisch 18 mittels eines geeigneten elektrischen Antriebes vor- und zurückbewegbar ist. Die weitere Platte 20 ist nahe des freien Endes des Übernahmetisches 18 angeordnet und bewegt sich gemeinsam mit diesem auf und ab.

Fig. 3 zeigt die Vorrichtung in ihrer Übemahmeposition. Der Übernahmetisch 18 befindet sich hierbei in seiner höchsten Stellung am Ende der im wesentlichen vertikalen Stützplatte 19. In dieser Position befindet sich die Auflagefläche des Übernahmetisches 18 in unmittelbarer Verlängerung zu der entsprechenden Auflagefläche der Seitenstütze 7, so daß die von der Seitenstütze 7 gebildete Bahn vorübergehend verlängert wird.

In einem nächsten Verfahrensschritt, der zeitlich zwischen Fig. 3 und Fig. 4 anzusiedeln ist, erfolgt eine Verschiebung des Warenstapels 2 entlang der Seitenstütze 7. Für diese Verschiebung werden beim Ausführungsbeispiel zwei Transportmechanismen zugleich eingesetzt: Zum einen bewegt sich der Boden 5 des Gestells entlang der Seitenstütze 7 und schiebt hierbei die Palette 4 mit dem Warenstapel 2 vor sich her. Zum anderen trägt als weiterer Transportmechanismus jene Fördereinrichtung bei, welche in die Seitenstütze 7 integriert ist und deren Förderkaft in Fig. 3 mit dem Pfeil 10 symbolisiert wurde. Je nach Art der Waren des Warenstapels kann es jedoch bereits ausreichend sein, für das Verschieben des Warenstapels ausschließlich die Schubkraft des angetriebenen Bodens 6 einzusetzen.

Nach dem Abschluß des Verschiebevorgangs befindet sich, wie dies Fig. 4 zeigt, die oberste Warenlage 1 und nur diese, nicht mehr auf der Seitenstütze 7, sondern bereits vollständig auf dem Übernahmetisch 18. Sodann wird, wie der Wechsel von Fig. 4 auf Fig. 5 zeigt, der als Hubtisch ausgebildete Übernahmetisch 18 einschließlich der darauf im wesentlichen vertikal angeordneten Warenlage 1 abgesenkt.

Bei diesem Absenken kann es zu einem Verkanten oder Verhaken der Waren bzw. Warengebinde der abgetrennten Warenlage an den Waren bzw. Warengebinden der nächstfolgenden Warenlage kommen. Um dies zu vermeiden wird kurz vor der Absenkung des Übernahmetisches 18 der Warenstapel 2 soweit in Richtung auf seine Ausgangsposition zurückgezogen, daß sich zwischen der auf dem Übernahmetisch 18 aufliegenden Warenlage 1 und den übrigen Warenlagen des Warenstapels 2 ein Spalt S von vorzugsweise 2 bis10 cm Breite einstellt.

Bei dem Absenken des Übernahmetisches gem. Fig. 5 bewegt sich der Übernahmetisch 18 an der Stützplatte 19 entlang, wodurch diese Stützplatte 19 zugleich die sich mit absenkenden Waren zur Seite hin abstützt. Zu diesem Zweck ist die Länge L der Stützplatte 18 größer als die entsprechende Breite B des Warenstapels.

Während der gesamten Übernahme der obersten Warenlage 1 ist ferner die weitere Platte 20 hilfreich. Diese verhindert ein Abkippen der unter Umständen instabilen Warenlage in die andere Richtung, d.h. nach außen hin. Falls es sich bei den Waren um besonders stabile und insbesondere quaderförmige Gebinde handelt, ist die weitere Platte 20 unter Umständen auch entbehrlich. Ihre Position, auf dem Übernahmetisch 18 läßt sich vorzugsweise stufenlos einstellen.

Im nächsten Verfahrensschritt, welcher in Fig. 6 dargestellt ist, schwenkt das Übergabegestell 16 nach unten, bis die Stützplatte 19 eine horizontale Lage und der Übernahmetisch 18 eine vertikale Lage einnimmt. Hierbei gelangt die auf ihrer Oberseite glattflächig gestaltete Stützplatte 19 in Fluchtung zu einer nachgeschalteten Förderbahn 24. In der Stellung gem. Fig. 6 befindet sich die isolierte Warenlage 1 wieder in ihrer ursprünglichen, nämlich horizontalen Ausrichtung, diesmal jedoch von dem übrigen Warenstapel getrennt und in Fluchtung zu der nachgeschalteten Förderbahn 24. Mittels eines in den Fig. 7 a und 7 b eingezeichneten horizontalen Schiebers 25 wird die auf der Stützplatte 19 aufliegende Warenlage 1 bis auf die nachgeschaltete Förderbahn 24 geschoben, auf der dann der Weitertransport erfolgt. Im Rahmen dieses Weitertransportes werden die einzelnen Waren oder Warengebinde, aus denen sich die isolierte Warenlage 1 zusammensetzt, weiter aufgeteilt bzw. getrennt. Die hierbei verwendeten technischen Mittel sind bekannt.

Da das Übergabegestell 16 gegensinnig zu dem Gestell 5 verschwenkt, baut die beschriebene Vorrichtung sehr kompakt. Die Förderbahn 24, auf der die vereinzelten Warenlagen abtransportiert werden, befindet sich in unmittelbarer Nachbarschaft und parallel zu jener Förderbahn 3, auf welcher die beladene Palette 4 in die Vorrichtung eingefahren wird. Die für die Vorrichtung benötigte Grundfläche ist daher sehr gering.

An den Verfahrenschritt gem. Fig. 6 schließt sich, nachdem der Schieber 25 die Warenlage auf die Förderbahn 24 geschoben hat, als nächstes der Verfahrensschritt gem. Fig. 2 an, d.h. das Übergabegestell 16 schwenkt wieder nach oben, anschließend wird der Übernahmetisch 18 wieder in seine höchste Position gefahren, um dort die nächste Warenlage des zu entstapelnden Warenstapels in Empfang zu nehmen. Entsprechend wird durch die Transporteinrichtungen des Gestells 5 der Warenstapel wieder um die Höhe einer Warenlage weitertransportiert.

### Bezugszeichenliste

- 1: Warenlage
- 2: Warenstapel
- 3: Förderbahn
- 4: Palette
- 5: Gestell
- 6: Boden
- 7: Seitenstütze
- 8: Seitenwand
- 9 a: Führung über Umlenkrolle
- 9 b: Führung über Umlenkrolle
- 10: Förderkraft
- 11: Stütze
- 12: Anschlag
- 13: Schwenkachse
- 16: Übergabegestell
- 18: Übernahmetisch
- 19: Stützplatte
- 20: weitere Platte
- 24: Förderbahn
- 25: Schieber
- B: Breite der Warenlage
- L: Wirksame Länge der Stützplatte
- S: Spalt

## Patentansprüche

1. Verfahren zum Entstapeln eines aus mehreren horizontal geschichteten Warenlagen bestehenden Warenstapels, umfassend die Schritte
a) Absetzen des Warenstapels auf einem einen Boden und eine hierzu rechtwinklige Seitenstütze aufweisenden Gestell, wobei der Warenstapel auf dem Boden aufliegt, während sich die Seitenstütze mit geringem oder keinem Abstand parallel zu einer der Seitenwände des Warenstapels erstreckt;
b) Schwenken des Gestells um eine horizontale Schwenkachse bis in eine Lage, in welcher der Warenstapel auf der Seitenstütze aufliegt;
c) Verschieben des Warenstapels entlang der Seitenstütze, wobei die oberste Warenlage die Seitenstütze verläßt und auf einen zu diesem Zeitpunkt in Verlängerung zu der Seitenstütze angeordneten Übernahmetisch gelangt;
d) Durch Verlagerung des Übernahmetisches Trennung der obersten Warenlage von den übrigen Warenlagen des Warenstapels;
e) Weitergabe des Warenstapels durch ein Verschwenken des Übernahmetisches gegensinnig zu dem vorangegangenen Verschwenken des Gestells bei gleichzeitiger Abstützung der Warenlage.

2. Verfahren nach Anspruch 1, **dadurch gekennzeichnet, daß** der Übernahmetisch mit der darauf aufliegenden Warenlage soweit verschwenkt, bis der Übernahmetisch eine im wesentlichen vertikale Lage eingenommen hat.

3. Verfahren nach Anspruch 1, **dadurch gekennzeichnet, daß** die Verlagerung des Übernahmetisches durch Absenken erfolgt.

4. Verfahren nach einem der Ansprüche 1 bis 3, **dadurch gekennzeichnet, daß** vor dem Beginn der Verlagerung der Übernahmetisches der auf der Seitenstütze aufliegende Warenstapel soweit in Richtung auf seine Ausgangsposition zurückgezogen wird, daß sich zwischen der auf dem Übernahmetisch aufliegenden Warenlage und der nächsten Warenlage ein Spalt von vorzugsweise 2-10 cm Breite einstellt.

5. Verfahren nach einem der Ansprüche 1 bis 4, **gekennzeichnet durch** eine gemeinsam mit dem Übernahmetisch verschwenkare, rechtwinklig zu diesem angeordneten Stützplatte, auf der die abgetrennte Warenlage nach Abschluß des Verschwenkens des Übernahmetisches aufliegt.

6. Verfahren nach Anspruch 5 in Verbindung mit Anspruch 3, **dadurch gekennzeichnet, daß** zum Verlagern des Übernahmetisches dieser an der Stützplatte entlang verlagert wird.

7. Vorrichtung zum Entstapeln eines aus mehreren horizontal geschichteten Warenlagen bestehenden Warenstapels mit einem um eine horizontale Achse (13) schwenkbaren Gestell (5), bestehend aus einem Boden (6), auf dem der Warenstapel (2) mit seiner Unterseite aufliegt, einer zu dem Boden (6) rechtwinkligen Seitenstütze (7), deren Höhe mindestens bis zu der obersten Warenlage (1) des Warenstapels (2) reicht, sowie Mitteln (6, 10) zum Verschieben des Warenstapels (2) entlang der Seitenstütze (7),
**gekennzeichnet durch**
einen bei vollständig verschwenktem Gestell (5) in Verlängerung zu dessen Seitenstütze (7) angeordneten und gegensinnig zu dem Gestell verschwenkbaren, die Warenlage abstützenden Übernahmetisch (18) sowie Antriebsmittel für den Übernahmetisch (18), um diesen aus seiner Übernahmeposition in Verlängerung zu der Seitenstütze (7) in eine dem gegenüber verlagerte Position zu verlagern.

8. Vorrichtung nach Anspruch 7, **dadurch gekennzeichnet, daß** der Übernahmetisch (18) um eine horizontale Achse verschwenkbar ist, und daß sich die Achse parallel zu der Schwenkachse (13) des Gestells (5) erstreckt.

9. Vorrichtung nach Anspruch 7 oder 8, **dadurch gekennzeichnet, daß** der Übernahmetisch (18) bis in eine im wesentlichen vertikale Lage verschwenkbar ist.

10. Vorrichtung nach einem der Ansprüche 7 bis 9, **dadurch gekennzeichnet, daß** der Übernahmetisch (18) als Hubtisch ausgebildet ist und daß die Antriebsmittel den Hubtisch im wesentlichen vertikal absenken.

11. Vorrichtung nach einem der Ansprüche 7 bis 10, **gekennzeichnet durch** eine rechtwinklig zu dem Übernahmetisch (18) angeordnete Stützplatte (19), die gemeinsam mit dem Übernahmetisch (18) verschwenkbar ist.

12. Vorrichtung nach Anspruch 11, **dadurch gekennzeichnet, daß** die Stützplatte (19) auf der horizontalen Achse gelagert ist, und daß der Übernahmetisch (18) durch die Antriebsmittel entlang der Stützplatte (19) verfahrbar ist.

13. Vorrichtung nach Anspruch 11 oder Anspruch 12, **dadurch gekennzeichnet, daß** in der Übernahmeposition die Enden der Seitenstütze (7) und der Stützplatte (19) im Winkel aufeinander stehen.

14. Vorrichtung nach einem der Ansprüche 11 bis 13, **dadurch gekennzeichnet, daß** die Stützplatte (19) in ihrer angesenkten Stellung zu einer Förderbahn (24) fluchtet, daß ein Schieber (25) vorgesehen ist, um eine auf der Stützplatte (19) aufliegende Warenlage (1) bis auf die Förderbahn (24) zu schieben, und daß die Bewegungsrichtung des Schiebers (25) parallel zu der Achse verläuft, um die der Übernahmetisch (18) verschwenkbar ist.

15. Vorrichtung nach einem der Ansprüche 11 bis 14, **dadurch gekennzeichnet, daß** an einem freien Ende des Übernahmetisches (18) eine Platte (20) verstellbar angeordnet ist, die sich parallel zu der Stützplatte (19) erstreckt.

## Claims

1. Method for destacking a stack of articles arranged in a plurality of horizontal layers, comprising the following steps
a) depositing the stack of articles on a stand having a floor and a side support at right angles thereto, the stack of articles resting on the floor while the side support extends at little or no distance from and parallel to one of the side walls of the stack of articles;
b) pivoting the stand about a horizontal pivot axis into a position in which the stack of articles rests on the side support;
c) displacing the stack of articles along the side support, the uppermost layer of articles leaving the side support and passing onto a transfer table arranged at this time as an extension of the side support;
d) separating the uppermost layer of articles from the remaining layers of articles of the stack of articles by displacing the transfer table;
e) transferring the stack of articles by pivoting the transfer table in the opposite direction to the preceding pivoting of the stand by simultaneously supporting the layer of articles.

2. Method according to Claim 1, **characterized in that** the transfer table with the layer of articles resting thereon is pivoted until the transfer table has assumed an essentially vertical position.

3. Method according to Claim 1, **characterized in that** the transfer table is displaced by lowering.

4. Method according to one of Claims 1 to 3, **characterized in that** before the displacement of the transfer table begins, the stack of articles resting on the side support is pulled back in the direction of its starting position until a gap preferably 2-10 cm wide arises between the layer of articles resting on the transfer table and the next layer of articles.

5. Method according to one of Claims 1 to 4, **characterized by** a supporting plate which can be pivoted together with the transfer table, is arranged at right angles thereto and on which the separated layer of articles rests after the pivoting of the transfer table is finished.

6. Method according to Claim 5 in conjunction with Claim 3, **characterized in that** in order to displace the transfer table the latter is displaced along the supporting plate.

7. Apparatus for destacking a stack of articles arranged in a plurality of horizontal layers, having a stand (5) which can be pivoted about a horizontal axis (13) and comprises a floor (6), on which the lower side of the stack of articles (2) rests, a side support (7) which is at right angles to the floor (6) and the height of which reaches at least as far as the uppermost layer of articles (1) of the stack of articles (2), and means (6, 10) for displacing the stack of articles (2) along the side support (7), **characterized by** a transfer table (18) which, when the stand (5) is fully pivoted, is arranged as an extension to the side support (7) thereof, and can be pivoted in the opposite direction to the stand and supports the layer of articles, and also driving means for the transfer table (18) in order to displace the latter from its transfer position as an extension to the side support (7) into a position displaced in relation thereto.

8. Apparatus according to Claim 7, **characterized in that** the transfer table (18) can be pivoted about a horizontal axis, and **in that** the axis extends parallel to the pivot axis (13) of the stand (5).

9. Apparatus according to Claim 7 or 8, **characterized in that** the transfer table (18) can be pivoted into an essentially vertical position.

10. Apparatus according to one of Claims 7 to 9, **characterized in that** the transfer table (18) is designed as a lifting table, and **in that** the driving means lower the lifting table essentially vertically.

11. Apparatus according to one of Claims 7 to 10, **characterized by** a supporting plate (19) which is arranged at right angles to the transfer table (18) and can be pivoted together with the transfer table (18).

12. Apparatus according to Claim 11, **characterized in that** the supporting plate (19) is arranged on the horizontal axis, and **in that** the transfer table (18) can be moved along the supporting plate (19) by the driving means.

13. Apparatus according to Claim 11 or Claim 12, **characterized in that** in the transfer position the ends of the side support (7) and of the supporting plate (19) are at an angle to each other.

14. Apparatus according to one of Claims 11 to 13, **characterized in that** the supporting plate (19) in its countersunk position is aligned with a conveying path (24), **in that** a slide (25) is provided in order to push a layer of articles (1) resting on the supporting plate (19) onto the conveying path (24), and **in that** the direction of movement of the slide (25) runs parallel to the axis about which the transfer table (18) can be pivoted.

15. Apparatus according to one of Claims 11 to 14, **characterized in that** a plate (20) which extends parallel to the supporting plate (19) is arranged adjustably at a free end of the transfer table (18).

## Revendications

1. Procédé de dépilage d'une pile d'articles constituée de plusieurs couches d'article superposées horizontalement, comprenant les étapes suivantes :
a) dépose de la pile d'articles sur une structure comportant un fond et un appui latéral perpendiculaire à celui-ci, la pile d'articles reposant sur le fond, tandis que l'appui latéral s'étend à faible distance ou à distance nulle, parallèlement à l'une des parois latérales de la pile d'articles ;
b) pivotement de la structure autour d'un axe de pivotement horizontal jusque dans une position dans laquelle la pile d'articles repose sur l'appui latéral ;
c) translation de la pile d'articles le long de l'appui latéral, la couche d'articles la plus haute quittant l'appui latéral et parvenant sur une table de reprise disposée à cet instant dans le prolongement de l'appui latéral ;
d) par déplacement de la table de reprise, séparation de la couche d'articles la plus haute des couches d'articles restantes de la pile d'articles ;
e) transfert de la pile d'articles, par pivotement de la table de reprise en sens contraire au pivotement précédent de la structure, avec soutien simultané de la couche d'articles

2. Procédé selon la revendication 1, **caractérisé en ce que** la table de reprise avec la couche d'articles reposant sur celle-ci est pivotée jusqu'à ce que la table de reprise prenne une position sensiblement verticale.

3. Procédé selon la revendication 1, **caractérisé en ce que** le déplacement de la table de reprise s'effectue par abaissement.

4. Procédé selon l'une des revendications 1 à 3, **caractérisé en ce qu'**avant le début du déplacement de la table de reprise, la pile d'articles reposant sur l'appui latéral est reculée en direction de sa position initiale jusqu'à ce qu'il s'établisse une fente de préférence de 2 à 10 cm de largeur entre la couche d'articles reposant sur la table de reprise et la couche d'articles suivante.

5. Procédé selon l'une des revendications 1 à 4, **caractérisé par** une plaque d'appui pouvant pivoter avec la table de reprise et disposée perpendiculairement à celle-ci, sur laquelle la couche d'articles séparée repose après achèvement du pivotement de la table de reprise.

6. Procédé selon la revendication 5, en combinaison avec la revendication 3, **caractérisé en ce que** pour déplacer la table de reprise, celle-ci est déplacée le long de la plaque d'appui.

7. Dispositif de dépilage d'une pile d'articles constituée de plusieurs couches d'articles superposées horizontalement comportant une structure (5) pouvant pivoter autour d'un axe horizontal (13), constituée d'un fond (6) sur lequel la pile d'articles (2) repose par sa face inférieure, d'un appui latéral (7) perpendiculaire au fond (6) dont la hauteur s'étend au moins jusqu'à la couche d'articles la plus haute (6) de la pile d'articles (2), ainsi que des moyens (6, 10) pour déplacer la pile d'articles (2) le long de l'appui latéral (7),
**caractérisé par**
une table de reprise (18) disposée dans le prolongement de l'appui latéral (7) de la structure (5), lorsque celle-ci est totalement pivotée, et pouvant pivoter en sens contraire à la structure, et soutenant la couche d'articles, ainsi que par des moyens d'entraînement pour la table de reprise (18), afin de déplacer celle-ci de sa position de reprise dans le prolongement de l'appui latéral (7) dans une position déplacée par rapport à celui-ci.

8. Dispositif selon la revendication 7, **caractérisé en ce que** la table de reprise (18) peut pivoter autour d'un axe horizontal et **en ce que** l'axe s'étend parallèlement à l'axe de pivotement (13) de la structure (5).

9. Dispositif selon la revendication 7 ou 8, **caractérisé en ce que** la table de reprise (18) peut pivoter jusque dans une position sensiblement verticale.

10. Dispositif selon l'une des revendications 7 à 9, **caractérisé en ce que** la table de reprise (18) est réalisée comme table de levage et **en ce que** les moyens d'entraînement abaissent la table de levage sensiblement verticalement.

11. Dispositif selon l'une des revendications 7 à 10, **caractérisé par** une plaque d'appui (19) disposée perpendiculairement à la table de reprise (18), laquelle peut pivoter avec la table de reprise (18).

12. Dispositif selon la revendication 11, **caractérisé en ce que** la plaque d'appui (19) est montée sur l'axe horizontal, et **en ce que** la table de reprise (18) est déplaçable par les moyens d'entraînement le long de la plaque d'appui (19).

13. Dispositif selon la revendication 11 ou la revendication 12, **caractérisé en ce que** dans la position de reprise les extrémités de l'appui latéral (7) et de la plaque d'appui (19) forment un angle entre elles.

14. Dispositif selon l'une des revendications 11 à 13, **caractérisé en ce que** dans sa position abaissée, la plaque d'appui (19) est alignée avec une voie de transport (24), **en ce qu'**il est prévu un pousseur (25) pour pousser une couche d'articles (1), reposant sur la plaque d'appui (19), jusque sur la voie de transport (24), et **en ce que** la direction de déplacement du pousseur (25) est parallèle à l'axe autour duquel la table de reprise (18) peut pivoter.

15. Dispositif selon l'une des revendications 11 à 14, **caractérisé en ce qu'**à une extrémité libre de la table de reprise (18) est disposée réglable une plaque (20) qui s'étend parallèlement à la plaque d'appui (19).
